# EUROPÄISCHE PATENTSCHRIFT

(11) **EP 2 254 679 B1**
(45) Veröffentlichungstag und Bekanntmachung des Hinweises auf die Patenterteilung: **19.11.2014**
(21) Anmeldenummer: 09715487.6
(22) Anmeldetag: 26.02.2009
(51) Int. Cl.: B01D 46/24, B01D 50/00, B01D 46/52, B01D 46/00, F02M 35/024

(54) **FILTEREINRICHTUNG, INSBESONDERE LUFTFILTER FÜR EINE BRENNKRAFTMASCHINE**
FILTER DEVICE, IN PARTICULAR AN AIR FILTER FOR AN INTERNAL COMBUSTION ENGINE
DISPOSITIF FILTRANT, NOTAMMENT FILTRE À AIR POUR UN MOTEUR À COMBUSTION INTERNE

(30) Priorität: 26.02.2008 DE 102008011186
(43) Veröffentlichungstag der Anmeldung: 01.12.2010
(73) Patentinhaber: Mann + Hummel GmbH, 71638 Ludwigsburg (DE)
(72) Erfinder: BECKER, Stefan, 68305 Mannheim (DE); LULEY, Oliver, 67227 Frankenthal (DE); MÜNKEL, Karlheinz, 75038 Oberderdingen (DE); WOLF, Michael, 66539 Neunkirchen (DE)
(74) Vertreter: Seyboth, Matthias
(86) Internationale Anmeldenummer: PCT/EP2009/052315
(87) Internationale Veröffentlichungsnummer: WO 2009/106587

(56) Entgegenhaltungen:
- DE-U1- 20 005 756
- FR-A- 1 288 229
- GB-A- 562 103
- GB-A- 891 854
- US-B2- 6 511 599

## Beschreibung

### Technisches Gebiet

Die Erfindung bezieht sich auf eine Filtereinrichtung, insbesondere auf einen Luftfilter für eine Brennkraftmaschine.

### Stand der Technik

Aus der EP 1 364 695 A1 ist ein Luftfilter bekannt, der in den Ansaugtrakt einer Brennkraftmaschine integriert wird, um die den Zylindern der Brennkraftmaschine zuzuführende Verbrennungsluft einer Filtration zu unterziehen. Der Luftfilter ist dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein Zyklonvorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Zyklonvorabscheider, Filterpatrone und Feinfilterelement liegen axial hintereinander und werden ohne Umlenkung der zu reinigenden Verbrennungsluft in Achsrichtung durchströmt.

Als Hauptfilterelement, welches in der Filterpatrone aufgenommen ist, kommen beispielsweise Wickelfilter in Betracht, die aus einem um einen Kern gewickelten, gewellten Filtermaterial bestehen, wobei auf Grund der Wellenform axiale Strömungskanäle durch das Filterelement gebildet sind, die wechselseitig an der Stirnseite verschlossen sind. Ein derartiges Filterelement wird beispielsweise in der US 7,008,467 B2 beschrieben.

Bekannt sind außerdem Filterelemente, die aus einem sternförmig gefalteten Filterelement in Form eines Filterbalgs bestehen, dessen Filterfalten in Radialrichtung verlaufen, wobei die Stirnkanten der Filterfalten sich in Achsrichtung erstrecken.

Ein Filterelement anderer Bauart, welches sich ebenfalls zur Luftfiltration eignet, wird in der FR 1 288 229 beschrieben. Das Filterelement besteht aus zwei radial ineinandergesetzten Filterbälgen bzw. Sternfiltern mit sternförmig angeordneten Filterfalten, zwischen denen ein Strömungsraum für die axiale Ableitung des gereinigten Fluids angeordnet ist. Die Innenseite des radial innen liegenden Filterbalgs sowie die Außenseite des radial außen liegenden Filterbalgs bilden jeweils die Rohselte, über die das zu reinigende Fluid das Filterelement radial anströmt.

Der zwischenliegende Strömungsraum dient zum axialen Abströmen des gereinigten Fluids.

### Offenbarung der Erfindung

Der Erfindung liegt die Aufgabe zu Grunde, mit einfachen konstruktiven Maßnahmen eine Filtereinrichtung zu schaffen, die sich durch eine hohe Filtrationsleistung auszeichnet, wobei die Filtereinrichtung mit geringem Aufwand gewartet werden können soll.

Diese Aufgabe wird erfindungsgemäß mit den Merkmalen der unabhängigen Ansprüche gelöst. Die abhängigen Ansprüche geben zweckmäßige Weiterbildungen an.

Gemäß einer ersten Lösung der Erfindung weist die Filtereinrichtung in einem Filtergehäuse ein Filterelement auf, das als Mehrfachbalgfilter, insbesondere als Zweifachbalgfilter mit zumindest zwei radial ineinandergesetzten Filterbälgen ausgebildet ist, zwischen denen ein Strömungsraum für das Fluid gebildet ist, wobei der Strömungsraum mit einer Stirnseite des Filterelements kommuniziert. Jeder Filterbalg ist als Sternfilter mit sternförmig angeordneten, sich in Radialrichtung erstreckenden Filterfalten mit axial verlaufenden Stirnkanten ausgebildet. Die radial innen liegenden Stirnkanten der Falten des äußeren Filterbalgs sowie die radial außen liegenden Stirnkanten der Falten des innen liegenden Filterbalgs begrenzen jeweils den Strömungsraum, der zweckmäßigerweise zum Ableiten des gereinigten Fluids dient, ggf. aber auch zum Heranführen des ungereinigten Fluids.

Des Weiteren ist an mindestens einer Stirnseite des Filterelements ein Dichtring angeordnet, welcher sich zwischen einem Filterbalg und dem Filtergehäuse befindet. Der Dichtring dient insbesondere zur strömungsdichten Separierung der Roh- von der Reinseite des Filterelementes und verhindert damit Fehlluftströme, die den Wirkungsgrad der Filtereinrichtung beeinträchtigen würden. Der Dichtring wird zweckmäßigerweise axial zwischen Filterelement und Gehäuseinnenseite eingeklemmt und in Achsrichtung kraftbeaufschlagt. Grundsätzlich kommt aber auch eine radiale Kraftbeaufschlagung bzw. eine Kombination von axialer und radialer Beaufschlagung in Betracht. Außerdem befindet sich der Dichtring vorteilhafterweise an der radialen Außenseite des Filterelementes, insbesondere im Übergang zwischen axialer Stirnseite und radial außen liegender Mantelfläche des Filterelementes. Diese Ausführung ermöglicht es, zumindest einen Teilstrom des zu filtrierenden Fluids über die radial außen liegende Mantelfläche des Filterelementes heranzuführen und zur Filtration radial durch das Filterelement bis zum Erreichen des Strömungsraums zwischen den beiden Filterbälgen hindurchzuführen. In dieser Ausführung begrenzt der Dichtring zugleich den Ringraum zwischen Gehäuseinnenseite und äußerer Mantelfläche des Dichtelementes in Achsrichtung.

Die Anströmung des als Mehrfachbalgfilter ausgeführten Filterelementes sowie die Ableitung des gereinigten Fluids kann auf verschiedene Weisen durchgeführt werden. Möglich ist es zum einen, die Wandung jedes Filterbalgs ausschließlich in Radialrichtung zu durchströmen und das gereinigte Fluid ausschließlich axial über den Strömungsraum, der zugleich den Reinraum bildet, abzuleiten. Darüber hinaus sind aber auch Mischformen möglich, beispielsweise dergestalt, dass zumindest ein Balg zusätzlich zur radialen Durchströmung auch axial angeströmt und ebenso die Abströmung zumindest eines Balges ebenfalls zusätzlich zur Strömungsführung über den Strömungsraum in Achsrichtung über Strömungskanäle innerhalb eines Balgs erfolgt. Vorteilhafterweise erfolgt jedoch die axiale Zuströmung über Strömungskanäle des ersten Filterbalgs, beispielsweise des außen liegenden Filterbalgs, und die axiale Abströmung über Strömungskanäle des zweiten Filterbalgs, beispielsweise des radial innen liegenden Filterbalgs. Um die Anströmung und die Abströmung in gewünschter Weise zu erreichen, sind erfindungsgemäß Abdeckelemente, insbesondere Abdeckscheiben bzw. -ringe an den entsprechenden axialen Stirnseiten der Filterbälge angeordnet. So wird erfindungsgemäß die axiale Stirnseite des radial innen liegenden Filterbalgs an der Anströmseite des Filterelementes von einem Abdeckring überdeckt, so dass an dieser Stelle eine axiale Anströmung ausgeschlossen ist. Die axiale Stirnseite im Anströmbereich des radial außen liegenden Filterbalgs ist dagegen offen, um an dieser Stelle zusätzlich zur radialen Anströmung auch eine axiale Anströmung zu erlauben.

Auf der Abströmseite befindet sich erfindungsgemäß am inneren Faltenbalg eine Abdeckscheibe, welche den innen liegenden Anströmraum innerhalb des Faltenbalges axial verschließt, um eine Fehlluftleitung unmittelbar zwischen Roh- und Reinseite zu verhindern. Die axiale Stirnseite des inneren Filterbalges ist dagegen frei von einer Abdeckung, so dass hierüber eine axiale Abströmung grundsätzlich möglich ist. Zugleich ist die axiale Stirnseite im Abströmbereich des radial außen liegenden Filterbalgs von einem Abdeckring überdeckt, der an dieser Stelle die axiale Abströmung verhindert.

Des weiteren ist es zweckmäßig, jeweils zwei unmittelbar benachbarte Filterfalten an einer axialen Stirnseite eines Filterbalgs zusammenzuheften, insbesondere miteinander zu verkleben bzw. zu verleimen. Vorteilhafterweise wird dies pro Filterbalg so durchgeführt, dass nur an einer axialen Stirnseite das Zusammenheften der Stirnkanten der Filterfalten durchgeführt wird, wohingegen die Stirnkanten der Filterfalten an der gegenüberliegenden Stirnseite von einem Abdeckelement abgedeckt sind. Bezogen auf die beiden Filterbälge wird das Zusammenheften der Stirnkanten der Filterfalten und die Abdeckung wechselseitig durchgeführt, so dass beispielsweise am radial außen liegenden Filterbalg die Stirnkanten verklebt und auf gegenüberliegender axialer Stirnseite von einem Abdeckring abgedeckt sind und am radial innen liegenden Filterbalg die axiale Anströmseite von einer Abdeckscheibe überdeckt ist und die Stirnkanten auf der gegenüberliegenden axialen Abströmseite zusammengeheftet sind. Durch das Zusammenheften der Stirnkanten entstehen in Achsrichtung verlaufende Strömungsräume bzw. -kanäle, wobei im Zusammenspiel mit den Abdeckelementen sichergestellt ist, dass das herangeführte Fluid die Filterwandung radial durchströmen muss.

Die Filterbälge sind vorzugsweise als Sternfilter ausgebildet. Es kann aber auch zweckmäßig sein, keine Sternfaltung vorzusehen, sondern eine Faltung in Achsrichtung mit Faltenkanten, die sich in Umfangsrichtung erstrecken oder zumindest eine Komponente in Umfangsrichtung aufweisen. Derartige Filterbälge mit einer Balgwirkung in Achsrichtung können mit oder ohne sternförmig angeordnete Falten versehen sein. Gegebenenfalls kommt auch eine Faltung mit Sternfaltung und einer Faltung in Achsrichtung in Betracht.

Die Filterbälge sind bevorzugt als Einzelbälge ausgeführt, die radial ineinander gesteckt sind und konzentrisch zueinander angeordnet sind. Gemäß einer alternativen Ausführung ist es aber auch möglich, zwei oder ggf. auch mehr Filterbälge aus einem einzigen, zusammenhängenden Balg zu formen, indem an einer oder an mehreren Stellen des einen Balgs ein Abschnitt umgeknickt wird, wobei die Knickkante eine axiale Stirnkante an der Anström- oder Abströmseite des Filterelementes bildet.

Des Weiteren ist es möglich, die Filterbälge jeweils gleichartig mit über die axiale Länge gleichem Verlauf oder aber unterschiedlich auszubilden. Möglich ist sowohl eine zylindrische Form als auch eine konische Form eines Filterbalgs bzw. beider Filterbälge. Gemäß einer vorteilhaften Ausführung ist vorgesehen, dass der radial außen liegende Filterbalg Zylinderform aufweist, dessen Außendurchmesser und Innendurchmesser sich über die axiale Länge nicht verändert, und dass der radial innen liegende Filterbalg Konusform aufweist, wobei der Konus sich zweckmäßigerweise von der Anström- zur Abströmseite hin verjüngt. Dadurch erhält man einen Strömungsraum zwischen den Filterbälgen in Form eines Ringkonus, der sich zur Abströmseite hin verbreitert, was unter strömungstechnischen Gesichtspunkten bezüglich der Ableitung des gereinigten Fluids Vorteile bringen kann. Über die axiale Länge besitzt der Strömungsraum somit einen sich ändernden Querschnitt, wobei die Änderungsrate konstant ist. Grundsätzlich ist aber auch eine über die axiale Länge wechselnde Änderungsrate möglich. Außerdem kann der Strömungsraum auch einen gleichbleibenden Querschnitt aufweisen, was dann der Fall ist, wenn die Innenseite des äußeren Filterbalgs und die Außenseite des inneren Filterbalgs konzentrisch zueinander verlaufen.

Des Weiteren kann es vorteilhaft sein, zwischen den Filterbälgen ein Stützgerüst vorzusehen, welches den Strömungsraum zwischen den Filterbälgen einfasst. Insbesondere bei großen, voluminösen Filtereinrichtungen, deren Filterelemente ein entsprechend höheres Gewicht aufweisen, dient das Stützgerüst, welches vorzugsweise aus Kunststoff besteht und zweckmäßigerweise axiale und in Umfangsrichtung verlaufende Streben aufweist, zur Steigerung der Stabilität.

Bei allen vorgenannten Filtereinrichtungen sind vorteilhafterweise Dichtringe zwischen Filterelement und Innenseite des aufnehmenden Filtergehäuses vorgesehen, die die Rohseite von der Reinseite des betreffenden Filterelementes separieren. Der Dichtring befindet sich vorzugsweise benachbart zur Abströmseite und insbesondere im Übergang zwischen der außen liegenden Mantelfläche des Filterelementes und der axialen Stirnseite im Abströmbereich. Diese Konfiguration erlaubt es, auch die außen liegende Mantelfläche als Strömungsseite zu nutzen, insbesondere zur Anströmung mit dem unfiltrierten Fluid. Die Kraftbeaufschlagung des Dichtringes erfolgt vorzugsweise in Achsrichtung, es kann ggf. aber auch eine ausschließliche oder zusätzliche radiale Beaufschlagung des Dichtringes zweckmäßig sein.

Der Dichtring erstreckt sich in Radialrichtung vorteilhafterweise bis zur äußeren Mantelfläche des Filterelementes, er weist somit keinen radialen Überstand auf. Gemäß einer weiteren Ausführung kann es aber vorteilhaft sein, das zumindest ein Abschnitt des Dichtringes die äußere Mantelfläche des Filterelementes radial überragt.

Das Filterelement ist vorteilhafterweise unabhängig von seiner konstruktiven Ausführung radial über eine von einem Deckel zu verschließende Gehäuseöffnung in das Filtergehäuse einzusetzen und axial von dem zu filtrierenden Fluid zu durchströmen. Des Weiteren kann es zweckmäßig sein, dem Filterelement einen Vorfilter vorzuschalten, der insbesondere als Zyklonvorabscheider ausgeführt ist und zweckmäßigerweise ebenfalls in Achsrichtung durchströmt wird. Außerdem kann gemäß einer weiteren vorteilhaften Ausführung dem Filterelement ein Sekundär- bzw. Feinfilterelement nachgeschaltet werden, das vorteilhafterweise ebenfalls in Achsrichtung durchströmt wird. In Kombination mit dem Vorfilter erhält man damit insgesamt eine axiale Durchströmung von drei Filtereinheiten. Das nachgeschaltete Feinfilterelement wird vorzugsweise ebenso wie das Hauptfilterelement radial über die verschließbare Gehäuseöffnung in das Filtergehäuse eingesetzt. Als Feinfilterelement kommen beispielsweise Blockelemente in Betracht.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Darstellung einer Filtereinrichtung, die insbesondere als Luftfilter für Brennkraftmaschinen eingesetzt wird und axial hintereinander einen Zyklonvorabscheider, ein Hauptfilterelement und ein nachgeschaltetes Feinfilterelement aufweist, wobei das Hauptfilterelement als Doppelbalgfilter mit zwei radial ineinandergesetzten Filterbälgen ausgebildet ist,
Fig. 2 die Filtereinrichtung nach Fig. 1 aus einer anderen Perspektive,
Fig. 3 das Hauptfilterelement der Filtereinrichtung aus Fig. 1 bzw. 2 im Schnitt,
Fig. 4 eine perspektivische Ansicht auf die sternförmigen Filterfalten eines Hauptfilterelementes,

In den Figuren sind gleiche Bauteile mit gleichen Bezugszeichen versehen.

### Ausführungsformen der Erfindung

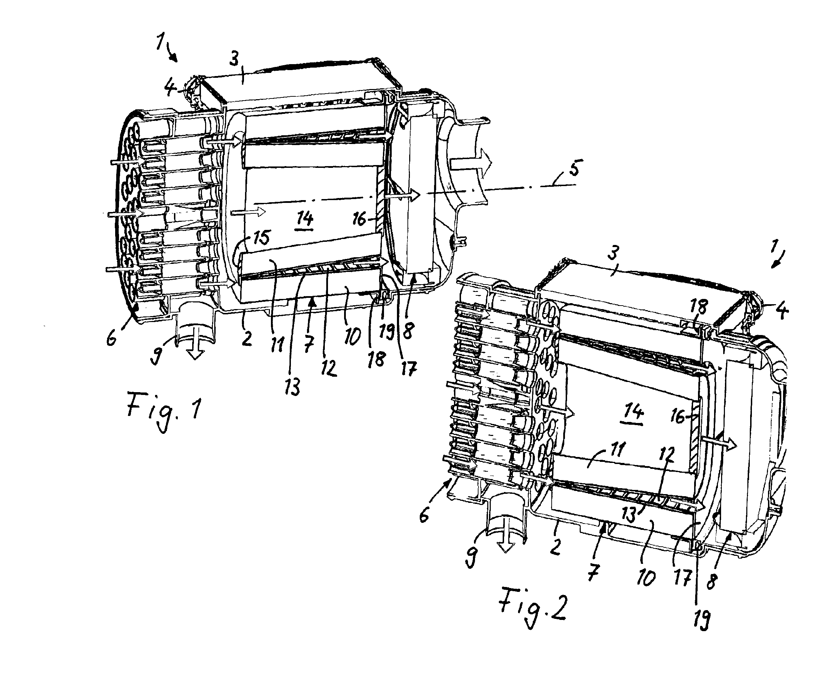

Bei der in den Figuren 1 und 2 dargestellten Filtereinrichtung 1 handelt es sich um einen Luftfilter für eine Brennkraftmaschine, bestehend aus einem Filtergehäuse 2, in welchem ein Hauptfilterelement 7 aufgenommen ist, einem als Vorfilter ausgebildeten Zyklonvorabscheider 6 sowie einem nachgeschalteten Feinfilterelement 8. Das Filtergehäuse 2 weist an seiner Umfangsseite eine Öffnung auf, die von einem über Verschlusselemente 4 lösbar angeordneten und verschließbaren Deckel 3 abgedeckt ist. Über diese Öffnung in der Mantelfläche des Filtergehäuses kann das Hauptfilterelement 7 und zweckmäßigerweise auch das Feinfilterelement 8 radial bzw. quer zur Achsrichtung in den Aufnahmeraum innerhalb des Filtergehäuses 2 eingesetzt bzw. aus diesem entnommen werden. Das Hauptfilterelement 7 befindet sich unmittelbar unterhalb des Deckels 3, das nachgeschaltete Feinfilterelement 8 liegt dagegen axial verschoben in einem Vorsprung im Filtergehäuse, so dass zum Einsetzen des Feinfilterelementes 8 dieses zunächst radial bei geöffnetem Deckel in das Filtergehäuse 2 eingesetzt und anschließend axial in den Vorsprung verschoben wird.

Auch der Zyklonvorabscheider 6 befindet sich in einem Vorsprung, welcher einteilig mit dem Filtergehäuse 2 ausgebildet ist. Im Zyklonvorabscheider werden die Schmutzpartikel aus der axial herangeführten Luft durch die Fliehkraft in einem rotierenden Luftstrom nach außen getragen und abgeschieden. Über eine Austragöffnung 9 im Filtergehäuse, die nach unten gerichtet sein kann, können die Schmutzpartikel, welche im Zyklonvorabscheider abgeschieden wurden, aus dem Filtergehäuse entfernt werden. Gegebenenfalls ist der Vorsprung, in dem der Zyklonvorabscheider aufgenommen ist, als separates Bauteil ausgeführt, das mit dem Filtergehäuse verbunden ist.

Vorfilter 6, Hauptfilterelement 7 und Feinfilterelement 8 sind axial hintereinander liegend angeordnet und weisen die gleich Längsachse 5 auf, welche zugleich die Längsachse der gesamten Filtereinrichtung 1 bildet. Die Durchströmung mit dem zu reinigenden Fluid erfolgt in Achsrichtung gemäß den eingetragenen Pfeilen.

Das Hauptfilterelement 7 besteht aus zwei einzelnen, radial ineinandergesetzten Filterbälgen 10 und 11, wobei der äußere Filterbalg 10 zylindrisch und der innere Filterbalg 11 konisch ausgebildet ist und sich in Strömungsrichtung verjüngt, jedoch eine gleichbleibende Faltenbreite aufweist. Zwischen der Innenseite des äußeren Filterbalgs 10 und der Außenseite des inneren Filterbalgs 11 ist ein Strömungsraum 12 gebildet, der auf Grund der abweichenden Form der beiden Filterbälge 10 und 11 in Achsrichtung gesehen einen veränderlichen Querschnitt aufweist. Da sich der innere Filterbalg 11 in Strömungsrichtung verjüngt, besitzt dementsprechend der Strömungsraum 12 einen sich in Strömungsrichtung vergrößernden Querschnitt.

Eingefasst ist der Strömungsraum 12 von einem Stützgerüst 13, das die beiden Filterbälge 10 und 11 gegeneinander abstützt und dem gesamten Filterelement 7 zusätzliche Stabilität verleiht. Der Strömungsraum 12 ist an der axialen Anströmseite verschlossen, was dadurch erzielt wird, dass an dieser Seite ein Abdeckring 15 angeordnet ist, welcher die axiale Stirnseite des radial innen liegenden Filterbalgs 11 überdeckt und zusätzlich auch den schmalen Spalt des Strömungsraumes 12 an dieser Seite. Es kann aber auch zweckmäßig sein, die beiden Filterbälge 10 und 11 an der Anströmseite des Hauptfilterelementes so weit zusammenzuführen, dass kein Strömungsspalt zur Anströmseite hin gegeben ist; in diesem Fall genügt es, den Abdeckring 15 lediglich an der axialen Stirnseite des inneren Filterbalgs 11 anzuordnen.

Das im Zyklonvorabscheider 6 vorgefilterte Fluid wird axial der stirnseitigen Anströmseite des Hauptfilterelements 7 zugeführt. Ein Teil des Fluids strömt unmittelbar axial in den Innenraum 14 des inneren Filterbalgs 11, der zur Abströmseite hin von einer Abdeckscheibe 16 verschlossen ist. Die Abdeckscheibe 16 erstreckt sich radial nur über die Öffnung des Innenraums 14, so dass das Fluid im Innenraum 14 axial von der Abdeckscheibe 16 an der Abströmung gehindert ist und stattdessen radial die Wandung des inneren Filterbalgs 11 durchströmen muss und weiter in den Strömungsraum 12 zwischen den Filterbälgen 10 und 11 gelangt, der einen Reinraum für das im Hauptfilterelement 7 gereinigte Fluid darstellt.

Ein zweiter Teilstrom des zum Hauptfilterelement 7 herangeführten Fluids tritt unmittelbar über die axiale Stirn- bzw. Anströmseite in den radial außen liegenden Filterbalg 11 ein, der an der gegenüberliegenden, axialen Abströmseite verschlossen ist, so dass das eintretende Fluid radial nach innen in den Strömungsraum 12 einströmt, der zur Reinseite des Hauptfilterelementes 7 hin geöffnet ist, so dass das gereinigte Fluid axial aus dem Strömungsraum 12 abströmen kann. Ein weiterer Teilstrom gelangt an die radial außen liegende Mantelfläche des außen liegenden Hauptfilterelementes 10 und durchströmt dieses radial von außen nach innen bis zum Strömungsraum 12.

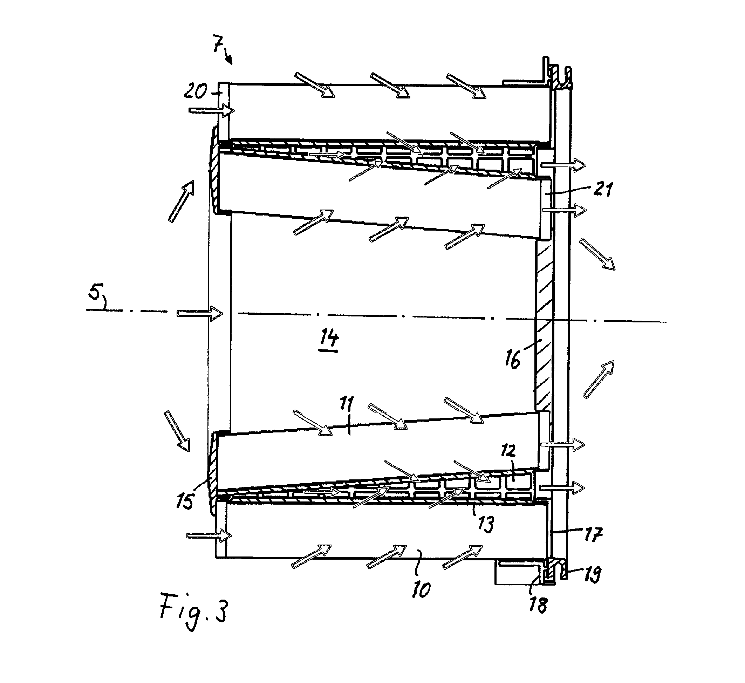

Wie den Figuren 1 und 2 und insbesondere der vergrößerten Darstellung des Filterelementes 7 nach Fig. 3 weiters zu entnehmen, ist die axiale Stirnseite des radial außen liegenden ersten Filterbalgs 10 im Bereich der Reinseite bzw. Abströmseite von einem Abdeckring 17 abgedeckt, der eine axiale Abströmung des Fluids verhindert, so dass das Fluid im äußeren Balg 10 gezwungen ist, radial von außen nach innen in den Strömungsraum 12 zu strömen.

Einteilig mit dem Abdeckring 17 ist ein Anschlagsflansch 18 ausgebildet, der sich auf der radialen Außenseite des radial äußeren Filterbalgs 10 im Bereich der Abströmseite befindet und einen Dichtring 19 begrenzt und abstützt, der an der Abströmseite axial zwischen dem Anschlagflansch 18 und einem Gehäusebauteil des Filtergehäuses eingeklemmt ist. Dieser Dichtring 19 trennt die Rohseite von der Reinseite des Filterelements 7. Der Dichtring 19 weist ein U-förmiges Profil auf, wobei die offene U-Seite radial nach außen weist. Der Dichtring 19 befindet sich unmittelbar an der Abströmseite bzw. der Stirnseite des Filterelementes 7 und erstreckt sich in Radialrichtung im Wesentlichen beginnend von der radial außen liegenden Mantelfläche des äußeren Filterbalgs 10 nach außen. Es kann zweckmäßig sein, dass der Dichtring 19 sich zumindest teilweise auch entlang der axialen Stirnseite an der Abströmseite erstreckt und insoweit an seiner Innenseite einen kleineren Durchmesser aufweist als der Durchmesser des Filterbalgs 10 an der radial außen liegenden Mantelfläche.

In Einbaulage wird der Dichtring 19 axial beaufschlagt. Es kann aber zweckmäßig sein, den Dichtring 19 zusätzlich radial zu beaufschlagen.

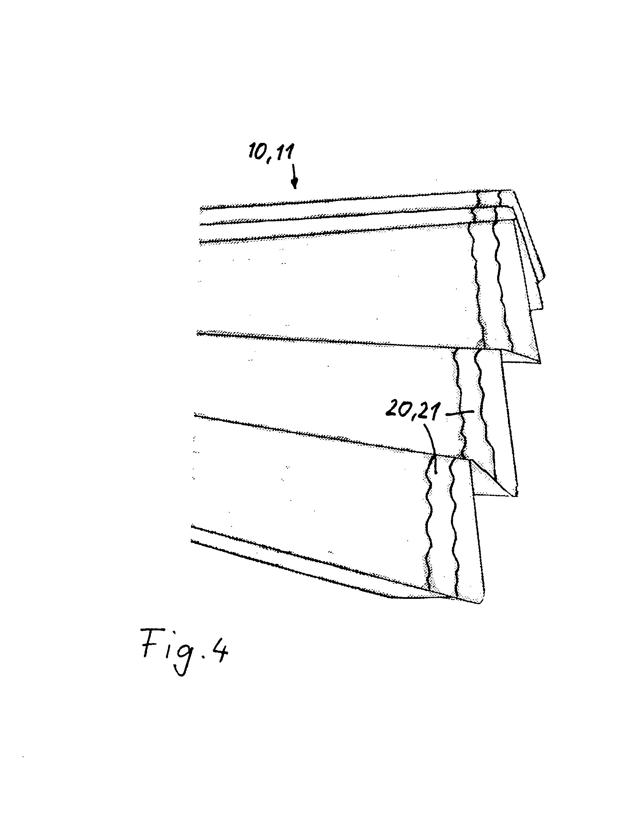

Wie Fig. 4 zu entnehmen, sind die beiden Filterbälge 10 und 11 jeweils als sternförmig gefaltete Faltenfilter ausgebildet, deren Falten jeweils im Bereich einer Stirnseite verklebt sind. Hierzu sind Klebeschichten 20 und 21 im Bereich der Stirnseiten auf die einzelnen Falten jedes Filterbalgs aufgebracht, um zwei unmittelbar aneinanderliegende Falten miteinander zu verkleben. Der radial außen liegende Filterbalg 10 weist eine derartige Klebeschicht 20 an der Anströmseite auf, der radial innen liegende Filterbalg 11 eine entsprechende Klebeschicht 21 im Bereich der Abströmseite. Die Verklebung hat zur Folge, dass jeweils zwei unmittelbar benachbarte Falten zusammengeklebt sind und zwischen zwei Paaren zusammengeklebter Falten ein in Achsrichtung der Längsachse 5 erlaufender Strömungskanal gebildet ist, der sich über die axiale Länge jedes Filterbalgs erstreckt. Dies bewirkt, dass, wie in Fig. 3 dargestellt, herangeführtes Fluid axial über die verklebten Stirnkanten des radial außen liegenden Filterbalgs 10 entlang der axialen Strömungskanäle einströmen kann, wohingegen im radial innen liegenden Filterbalg 11 eine axiale Abströmung über die mit der Klebeschicht 21 versehene Stirnkante im Abströmbereich möglich ist.

In Fig. 4 ist ein Filterbalg 10 bzw. 11 in Form eines Sternfilters während des Herstellungsprozesses dargestellt. Auf lediglich eine Seite der Falten ist eine Kleberaupe 20 bzw. 21 aufgebracht, so dass bei einem Zusammenkleben unmittelbar benachbarter Falten jeweils zwei Schichten aufeinander liegen und über die Kleberaupen zusammengeleimt sind. Auf der den Kleberaupen 20, 21 gegenüberliegenden Seite der Falten wird auf eine entsprechende Klebeschicht verzichtet, so dass an dieser Seite axiale Strömungskanäle gebildet sind.

## Patentansprüche

1. Filtereinrichtung, insbesondere Luftfilter für eine Brennkraftmaschine, mit einem in einem Filtergehäuse (2) angeordneten Filterelement (7), das von einem zu filtrierenden Fluid zu durchströmen ist, wobei das Filterelement (7) als Mehrfachbalgfilter mit mindestens zwei radial ineinandergesetzten Filterbälgen (10, 11) ausgebildet ist, mindestens ein Filterbalg (10, 11) in Radialrichtung zu durchströmen ist und zwischen den Filterbälgen (10, 11) ein Strömungsraum (12) für das Fluid gebildet ist, der mit einer Stirnseite des Filterelements (7) kommuniziert, wobei der Strömungsraum (12) den Reinraum bildet und axial zur Anströmseite verschlossen ist und die den Strömungsraum (12) radial begrenzenden Filterbälge (10, 11) jeweils radial in Richtung des Strömungsraums (12) durchströmt werden, wobei jeder Filterbalg (10, 11) als Sternfilter mit sternförmig angeordneten Filterfalten ausgebildet ist, wobei an mindestens einer Stirnseite des Filterelements (7) ein Dichtring (19) zwischen einem Filterbalg (11) und dem Filtergehäuse (2) angeordnet ist, **dadurch gekennzeichnet, dass** ein erster Filterbalg (10) an einer Stirnseite von einem Abdeckelement (17) abgedeckt ist und der zweite Filterbalg (11) an der gegenüberliegenden Stirnseite von einem Abdeckelement (15) abgedeckt ist, wobei die axiale anströmseitige Stirnseite des radial innen liegenden Filterbalges von einem Abdeckring überdeckt ist und die axiale abströmseitige Stirnseite des radial innen liegenden Filterbalges keine Abdeckung aufweist und eine Abdeckscheibe vorgesehen ist, die den innen liegenden Anströmraum innerhalb des inneren Faltenbalges axial verschließt, wobei die axiale abströmseitige Stirnseite des radial außen liegenden Filterbalgs von einem Abdeckring überdeckt ist.

2. Filtereinrichtung nach Anspruch 1, **dadurch gekennzeichnet, dass** zumindest ein Teil unmittelbar zueinander benachbarter Filterfalten an einer axialen Stirnseite eines Filterbalgs (10, 11) zusammengeheftet sind.

3. Filtereinrichtung nach Anspruch 2, **dadurch gekennzeichnet, dass** die Stirnkanten der Filterfalten an der Anströmseite zusammengeheftet sind.

4. Filtereinrichtung nach Anspruch 2 oder 3, **dadurch gekennzeichnet, dass** die Stirnkanten der Filterfalten an der Abströmseite zusammengeheftet sind.

5. Filtereinrichtung nach einem der Ansprüche 2 bis 4, **dadurch gekennzeichnet, dass** zwischen jeweils zwei zusammengehefteten Filterfalten an der Stirnseite eines Filterbalgs (10, 11) ein freier Strömungsdurchtritt gebildet ist.

6. Filtereinrichtung nach einem der Ansprüche 2 bis 5, **dadurch gekennzeichnet, dass** die zusammengehefteten Filterfalten miteinander verklebt sind.

7. Filtereinrichtung nach einem der Ansprüche 1 bis 6, **dadurch gekennzeichnet, dass** der Strömungsraum (12) zwischen den Filterbälgen (10, 11) einen sich über die axiale Länge des Filterelements (7) ändernden Querschnitt aufweist.

8. Filtereinrichtung nach Anspruch 7, **dadurch gekennzeichnet, dass** der Querschnitt des Strömungsraums (12) zur Abströmseite hin zunimmt.

9. Filtereinrichtung nach einem der Ansprüche 1 bis 8, **dadurch gekennzeichnet, dass** der Strömungsraum (12) zwischen den Filterbälgen (10, 11) von einem Stützgerüst (13) eingefasst ist.

10. Filtereinrichtung nach einem der Ansprüche 1 bis 9, **dadurch gekennzeichnet, dass** ein Filterbalg (10) axial angeströmt wird.

11. Filtereinrichtung nach Anspruch 10, **dadurch gekennzeichnet, dass** der Dichtring (19) an der Abströmseite im Übergang zwischen axialer Stirnseite und radial außen liegender Mantelfläche des Filterelements (7) angeordnet ist.

12. Filtereinrichtung nach Anspruch 11, **dadurch gekennzeichnet, dass** der Dichtring (19) zwischen dem Filterelement (7) und dem Filtergehäuse (2) bzw. einem mit dem Filtergehäuse (2) verbundenen Bauteil eingeklemmt ist.

13. Filtereinrichtung nach einem der Ansprüche 1 bis 12, **dadurch gekennzeichnet, dass** das Filterelement (7) quer zur Durchströmrichtung in das Filtergehäuse (2) einzusetzen bzw. aus dem Filtergehäuse (2) zu entnehmen ist.

14. Filtereinrichtung nach einem der Ansprüche 1 bis 13, **dadurch gekennzeichnet, dass** mindestens eine weitere Filtereinheit (6, 8) im Filtergehäuse (2) vorgesehen ist, wobei das Filterelement (7) und die weitere Filtereinheit (6, 8) hintereinander liegend angeordnet sind und eine gemeinsame Durchströmrichtung für das zu reinigende Fluid besitzen.

15. Filterelement (7) zur Verwendung in einer Filtereinrichtung nach einem der vorhergehenden Ansprüche, insbesondere Luftfilterelement für eine Brennkraftmaschine, wobei das Filterelement (7) in einem Filtergehäuse (2) anordenbar und von einem zu filtrierenden Fluid durchströmbar ist, wobei das Filterelement (7) als Mehrfachbalgfilter mit mindestens zwei radial ineinandergesetzten Filterbälgen (10, 11) ausgebildet ist, mindestens ein Filterbalg (10, 11) in Radialrichtung zu durchströmen ist und zwischen den Filterbälgen (10, 11) ein Strömungsraum (12) für das Fluid gebildet ist, der mit einer Stirnseite des Filterelements (7) kommuniziert, wobei der Strömungsraum (12) den Reinraum bildet und axial zur Anströmseite verschlossen ist und die den Strömungsraum (12) radial begrenzenden Filterbälge (10, 11) jeweils radial in Richtung des Strömungsraums (12) durchströmt werden, wobei jeder Filterbalg (10, 11) als Sternfilter mit sternförmig angeordneten Filterfalten ausgebildet ist, wobei an mindestens einer Stirnseite des Filterelements (7) ein Dichtring (19) zur Abdichtung zwischen einem Filterbalg (11) und dem Filtergehäuse (2) angeordnet ist, **dadurch gekennzeichnet, dass** ein erster Filterbalg (10) an einer Stirnseite von einem Abdeckelement (17) abgedeckt ist und der zweite Filterbalg (11) an der gegenüberliegenden Stirnseite von einem Abdeckelement (15) abgedeckt ist, wobei die axiale anströmseitige Stirnseite des radial innen liegenden Filterbalges von einem Abdeckring überdeckt ist und die axiale abströmseitige Stirnseite des radial innen liegenden Filterbalges keine Abdeckung aufweist und eine Abdeckscheibe vorgesehen ist, die den innen liegenden Anströmraum innerhalb des inneren Faltenbalges axial verschließt, wobei die axiale abströmseitige Stirnseite des radial außen liegenden Filterbalgs von einem Abdeckring überdeckt ist.

## Claims

1. Filtering device, in particular air filter for an internal combustion engine, with a filter element (7) to be flowed through by a fluid to be filtered and disposed in a filter housing (2), the filter element (7) being designed as multiple filter bellows with at least two radially nested filter bellows (10, 11), at least one filter bellows (10, 11) to be flowed through in radial direction and a flow chamber (12) for the fluid, which communicates with a front face of the filter element (7), being formed between the filter bellows (10, 11), the flow chamber (12) forming the clean chamber and being axially closed with regard to the inflow side and the filter bellows (10, 11) radially defining the flow chamber (12) being each radially flowed through in the direction of the flow chamber (12), each filter bellows (10, 11) being designed as star filter with filter folds disposed in a star-shaped manner, a seal ring (19) being disposed on at least one front face of the filter element (7) between a filter bellows (11) and the filter housing (2), **characterized in that** a first filter bellows (10) is covered on a front face by a cover element (17) and that the second filter bellows (11) on the opposing front face is covered by a cover element (15), the axial front face on the inflow side of the radial inner filter bellows being covered by a cover ring and the axial front face on the outflow side of the radial inner filter bellows featuring no cover and a cover plate being provided which axially closes the inner inflow chamber inside of the inner filter bellows, the axial front face on the outflow side of the radial outer filter bellows being covered by a cover ring.

2. Filtering device according to claim 1, **characterized in that** at least one part of filter folds directly adjacent to one another are stitched together on an axial front face of a filter bellows (10, 11).

3. Filtering device according to claim 2, **characterized in that** the end edges of the filter folds are stitched together on the inflow side.

4. Filtering device according to claim 2 or 3, **characterized in that** the end edges of the filter folds are stitched together on the outflow side.

5. Filtering device according to one of the claims 2 to 4, **characterized in that** a free flow passage is formed between respectively two filter folds stitched together on the front face of a filter bellows (10, 11).

6. Filtering device according to one of the claims 2 to 5, **characterized in that** the filter folds stitched together are glued together.

7. Filtering device according to one of the claims 1 to 6, **characterized in that** the flow chamber (12) between the filter bellows (10, 11) features a cross-section that changes across the axial length of the filter element (7).

8. Filtering device according to claim 7, **characterized in that** the cross-section of the flow chamber (12) increases towards the outflow side.

9. Filtering device according to one of the claims 1 to 8, **characterized in that** the flow chamber (12) between the filter bellows (10, 11) is surrounded by a support frame (13).

10. Filtering device according to one of the claims 1 to 9, **characterized in that** a filter bellows (10) receives an axial flow.

11. Filtering device according to claim 10, **characterized in that** the seal ring (19) is disposed on the outflow side in the transition between axial front face and radial outer girth area of the filter element (7).

12. Filtering device according to claim 11, **characterized in that** the seal ring (19) is clamped between the filter element (7) and the filter housing (2) or a component connected with the filter housing (2).

13. Filtering device according to one of the claims 1 to 12, **characterized in that** the filter element (7) is to be inserted into the filter housing (2) or removed from the filter housing (2) transversely to the flow direction.

14. Filtering device according to one of the claims 1 to 13, **characterized in that** at least another filter unit (6, 8) is provided in the filter housing (2), the filter element (7) and the other filter unit (6, 8) being disposed one behind the other and having a common flow direction for the fluid to be purified.

15. Filter element (7) for being used in a filtering device according to one of the above claims, in particular air filter element for an internal combustion engine, the filter element (7) being arrangeable in a filter housing (2) and throughflowable by a fluid to be filtered, the filter element (7) being designed as multiple filter bellows with at least two radially nested filter bellows (10, 11), at least one filter bellows (10, 11) to be flowed through in radial direction and a flow chamber (12) for the fluid, which communicates with a front face of the filter element (7), being formed between the filter bellows (10, 11), the flow chamber (12) forming the clean chamber and being axially closed with regard to the inflow side and the filter bellows (10, 11) radially defining the flow chamber (12) being each radially flowed through in the direction of the flow chamber (12), each filter bellows (10, 11) being designed as star filter with filter folds disposed in a star-shaped manner, a seal ring (19) for sealing being disposed on at least one front face of the filter element (7) between a filter bellows (11) and the filter housing (2), **characterized in that** a first filter bellows (10) is covered on a front face by a cover element (17) and that the second filter bellows (11) on the opposing front face is covered by a cover element (15), the axial front face on the inflow side of the radial inner filter bellows being covered by a cover ring and the axial front face on the outflow side of the radial inner filter bellows featuring no cover and a cover plate being provided which axially closes the inner inflow chamber inside of the inner filter bellows, the axial front face on the outflow side of the radial outer filter bellows being covered by a cover ring.

## Revendications

1. Dispositif de filtration, en particulier filtre à air pour un moteur à combustion interne, avec un élément filtrant (7) disposé dans un boîtier de filtre (2) et destiné à être parcouru par un fluide à filtrer, l'élément filtrant (7) étant réalisé sous la forme d'un filtre à plusieurs soufflets constitué d'au moins deux soufflets de filtre (10, 11) emboîtés radialement, au moins un soufflet de filtre (10, 11) pouvant être parcouru dans le sens radial, et un espace d'écoulement (12) étant formé pour le fluide entre les soufflets de filtre (10, 11) et communiquant avec une face frontale de l'élément filtrant (7), l'espace d'écoulement (12) formant l'espace pur et étant fermé en sens axial par rapport au côté d'entrée, et les soufflets de filtre (10, 11) limitant l'espace d'écoulement (12) en sens radial étant parcourus en sens radial en direction de l'espace d'écoulement (12), chacun des soufflets de filtre (10, 11) étant réalisé sous la forme d'un filtre en étoile dont les plis sont agencés sous la forme d'une étoile, une bague d'étanchéité (19) étant disposée sur au moins une face frontale de l'élément filtrant (7) entre un soufflet de filtre (11) et le boîtier de filtre (2), **caractérisé en ce qu'**un premier soufflet de filtre (10) est recouvert sur une face frontale par un élément de couverture (17) et que le deuxième soufflet de filtre (11) sur la face frontale opposée est recouvert par un élément de couverture (15), la face frontale axiale côté entrée du soufflet de filtre situé à l'intérieur en sens radial étant recouverte par une bague de recouvrement et la face frontale axiale côté sortie du soufflet de filtre situé à l'intérieur en sens radial n'étant pas recouverte et une plaque de recouvrement qui obture en sens axial l'espace d'entrée intérieur au sein du soufflet de filtre intérieur étant prévue, la face frontale axiale côté sortie du soufflet de filtre situé à l'extérieur en sens radial étant recouverte par une bague de recouvrement.

2. Dispositif de filtration selon la revendication 1, **caractérisé en ce qu'**au moins certains plis de filtre directement adjacents sont agrafés ensemble au niveau d'une face frontale axiale d'un soufflet de filtre (10, 11).

3. Dispositif de filtration selon la revendication 2, **caractérisé en ce que** les bords frontaux des plis de filtre sont agrafés ensemble au niveau du côté d'entrée.

4. Dispositif de filtration selon la revendication 2 ou 3, **caractérisé en ce que** les bords frontaux des plis de filtre sont agrafés ensemble au niveau du côté de sortie.

5. Dispositif de filtration selon l'une des revendications 2 à 4, **caractérisé en ce qu'**un passage d'écoulement libre est formé entre respectivement deux plis de filtre agrafés ensemble au niveau de la face frontale d'un soufflet de filtre (10, 11).

6. Dispositif de filtration selon l'une des revendications 2 à 5, **caractérisé en ce que** les plis de filtre agrafés ensemble sont collés les uns aux autres.

7. Dispositif de filtration selon l'une des revendications 1 à 6, **caractérisé en ce que** l'espace d'écoulement (12) situé entre les soufflets de filtre (10, 11) présente une section qui change sur la longueur axiale de l'élément filtrant (7).

8. Dispositif de filtration selon la revendication 7, **caractérisé en ce que** la section de l'espace d'écoulement (12) augmente en direction du côté de sortie.

9. Dispositif de filtration selon l'une des revendications 1 à 8, **caractérisé en ce que** l'espace d'écoulement (12) situé entre les soufflets de filtre (10, 11) est bordé d'une structure d'appui (13).

10. Dispositif de filtration selon l'une des revendications 1 à 9, **caractérisé en ce qu'**un soufflet de filtre (10) est parcouru en sens axial.

11. Dispositif de filtration selon la revendication 10, **caractérisé en ce que** la bague d'étanchéité (19) est disposée du côté de sortie dans la transition entre la face frontale axiale et la surface d'enveloppe située à l'extérieur en sens radial de l'élément filtrant (7).

12. Dispositif de filtration selon la revendication 11, **caractérisé en ce que** la bague d'étanchéité (19) est serrée entre l'élément filtrant (7) et le boîtier de filtre (2) ou un composant relié au boîtier de filtre (2).

13. Dispositif de filtration selon l'une des revendications 1 à 12, **caractérisé en ce que** l'élément filtrant (7) peut être monté dans le boîtier de filtre (2) et/ou être retiré de ce boîtier de filtre (2) en travers du sens de passage.

14. Dispositif de filtration selon l'une des revendications 1 à 13, **caractérisé en ce qu'**au moins une autre unité filtrante (6, 8) est prévue dans le boîtier de filtre (2), l'élément filtrant (7) et l'autre unité filtrante (6, 8) étant disposés l'un derrière l'autre et possédant un sens de passage commun pour le fluide à purifier.

15. Élément filtrant (7) destiné à être utilisé dans un dispositif de filtration selon l'une des revendications précédentes, en particulier élément de filtre à air pour un moteur à combustion interne, l'élément filtrant (7) pouvant être disposé dans un boîtier de filtre (2) et pouvant être parcouru par un fluide à filtrer, l'élément filtrant (7) étant réalisé sous la forme d'un filtre à plusieurs soufflets constitué d'au moins deux soufflets de filtre (10, 11) emboîtés radialement, au moins un des soufflets de filtre (10, 11) pouvant être parcouru dans le sens radial, et un espace d'écoulement (12) étant formé pour le fluide entre les soufflets de filtre (10, 11) et communiquant avec une face frontale de l'élément filtrant (7), l'espace d'écoulement (12) formant l'espace pur et étant fermé en sens axial par rapport au côté d'entrée, et les soufflets de filtre (10, 11) limitant l'espace d'écoulement (12) en sens radial étant parcourus en sens radial en direction de l'espace d'écoulement (12), chacun des soufflets de filtre (10, 11) étant réalisé sous la forme d'un filtre en étoile dont les plis sont agencés sous la forme d'une étoile, une bague d'étanchéité (19) étant disposée sur au moins une face frontale de l'élément filtrant (7), à des fins d'étanchéité, entre un soufflet de filtre (11) et le boîtier de filtre (2), **caractérisé en ce qu'**un premier soufflet de filtre (10) est recouvert sur une face frontale par un élément de couverture (17) et que le deuxième soufflet de filtre (11) sur la face frontale opposée est recouvert par un élément de couverture (15), la face frontale axiale côté entrée du soufflet de filtre situé à l'intérieur en sens radial étant recouverte par une bague de recouvrement et la face frontale axiale côté sortie du soufflet de filtre situé à l'intérieur en sens radial n'étant pas recouverte et une plaque de recouvrement qui obture en sens axial l'espace d'entrée intérieur au sein du soufflet de filtre intérieur étant prévue, la face frontale axiale côté sortie du soufflet de filtre situé à l'extérieur en sens radial étant recouverte par une bague de recouvrement.
